# EUROPÄISCHE PATENTSCHRIFT

(11) **EP 1 567 792 B1**
(45) Veröffentlichungstag und Bekanntmachung des Hinweises auf die Patenterteilung: **24.12.2008**
(21) Anmeldenummer: 03776876.9
(22) Anmeldetag: 31.10.2003
(51) Int. Cl.: F16H 61/00, F16H 55/56

(54) **VORRICHTUNG ZUM VERSORGEN EINES ANTRIEBSELEMENTES MIT HYDRAULIKMEDIUM**
DEVICE FOR SUPPLYING A DRIVE ELEMENT WITH HYDRAULIC MEDIUM
DISPOSITIF D'ALIMENTATION D'UN ELEMENT D'ENTRAINEMENT AVEC FLUIDE HYDRAULIQUE

(30) Priorität: 28.11.2002 DE 10255536
(43) Veröffentlichungstag der Anmeldung: 31.08.2005
(73) Patentinhaber: AUDI AG, 85045 Ingolstadt (DE)
(72) Erfinder: FLEISCHMANN, Hans, 85134 Stammham (DE)
(74) Vertreter: Asch, Konrad
(86) Internationale Anmeldenummer: PCT/EP2003/012110
(87) Internationale Veröffentlichungsnummer: WO 2004/048815

(56) Entgegenhaltungen:
- EP-A- 0 760 440
- EP-A- 1 156 235
- DE-A- 10 203 944
- DE-A- 19 757 232
- DE-A- 19 857 710
- DE-U- 8 535 076
- US-A- 4 640 152
- US-A- 5 533 943
- PATENT ABSTRACTS OF JAPAN vol. 010, no. 181 (M-492), 25. Juni 1986 (1986-06-25) & JP 61 027355 A (NISSAN MOTOR CO LTD), 6. Februar 1986 (1986-02-06)

## Beschreibung

Die Erfindung betrifft eine Vorrichtung zum Versorgen eines drehbar in einem Getriebegehäuse gelagerten, als Antriebselement dienenden Scheibensatzes eines Umschlingungsgetriebes mit Hydraulikmedium, gemäß dem Oberbegriff des Anspruchs 1.

In der Regel werden in einem Getriebegehäuse drehbar gelagerte Antriebselemente - dies kann nur beispielsweise ein Scheibensatz eines Umschlingungsgetriebes in einem Kraftfahrzeug sein, dessen hydraulisch verstellbare Losscheibe relativ zu einer Festscheibe axial verschiebbar ist - über Kanäle in der das Antriebselement tragenden Welle von einem mit der hydraulischen Steuerung verbundenem, koaxial angeordnetem Element übertragen. Insbesondere wenn für die hydraulische Steuerung mehrere separate Kanäle erforderlich sind, bedingt dies einen erheblichen fertigungstechnischen Aufwand und eine nicht unbeträchtliche Schwächung der besagten Welle durch die erforderlichen Wellenbohrungen.

Aufgabe der Erfindung ist es, eine Vorrichtung vorzuschlagen, die eine zuverlässige hydraulische Versorgung eines als Antriebselement dienenden Scheibensatzes eines Umschlingungsgetriebes ermöglicht.

Diese Aufgabe wird mit den Merkmalen des Patentanspruches 1 gelöst. Vorteilhafte Weiterbildungen der Erfindung sind in den weiteren Patentansprüchen angeführt.

Die gattungsgemäße DE197 57 232 A1 zeigt ein Umschlingungsgetriebe mit einem verstellbaren Scheibensatz und einem Ausgleichsgetriebegehäuse, das integral mit der Welle des Scheibensatzes ausgebildet ist.

Die DE 102 03 944 A1 zeigt ein Umschlingungsgetriebe mit einem verstellbaren Scheibensatz, bei dem das Hydraulikfluid zum Verstellen des Scheibensatzes über die Welle des Scheibensatzes zugeführt wird.

Die US 4,640,152 zeigt ein mehrstufiges Getriebe nach der Planetengetriebebauart, bei dem zum Schalten der Gangstufen Kupplungen hydraulisch geschlossen und gelüftet werden. Eine Kupplung wird über einen Abschnitt eines Lageraufbaus mittels Verbindungsrohre, die das ortsfeste Getriebegehäuse mit dem Lageraufbau verbinden, mit Hydraulikfluid versorgt.

Nach der Erfindung ist das Antriebselement mit dem Ausgleichsgehäuse drehschlüssig verbunden ist und als Anschtussverbindung dient zumindest ein dicht in die beiden Kanäle eingesetztes Steckrohr, das unmittelbar von dem Ausgleichsgehäuse zum Antriebselement verläuft. Das zumindest eine Steckrohr läuft somit mit dem das Hydraulikmedium zuführendem Ausgleichsgehäuse um; Wellenbohrungen können demzufolge entfallen. Ferner bildet das zumindest eine Steckrohr eine Verbindung, die begrenzt kardanische Bewegungen und einen axialen Ausgleich zwischen dem Antriebselement und dem Ausgleichsgehäuse zulässt; daraus resultiert eine auch bei ungünstigen Toleranzpaarungen bzw. Betriebsbedingungen (Temperatur, Last) oder Planlauffehlern zuverlässige Druckmittelversorgung des Antriebselementes.

Das zumindest eine Steckrohr kann radial innerhalb eines zwischen dem Antriebselement und dem benachbart angeordnetem Ausgleichsgehäuse vorgesehenem Wälzlagers verlaufen. Damit ist eine Versorgung des Antriebselementes auch dann über zumindest ein Steckrohr ermöglicht, wenn getriebetechnisch eine Lagerung zwischen dem Antriebselement und dem Ausgleichsgehäuse angezeigt ist.

Bevorzugt kann dabei der Innenring des Wälzlagers auf einem Hals des Antriebselementes sitzen und das zumindest eine Steckrohr in einer korrespondierenden Ausnehmung des Halses verlaufen. Das Steckrohr kann damit ohne baulichen und räumlichen Mehraufwand in das Antriebselement teilweise integriert sein.

Zur einfachen axialen Sicherung kann das Steckrohr mit einem radialen Vorsprung versehen sein, mittels dem es stirnseitig zwischen dem Innenring des Wälzlagers und dem anschließenden Antriebselement gehalten ist.

Ferner kann zur einfachen Montage der Getriebeelemente das Steckrohr an beiden Enden Dichtringe zur Abdichtung mit den anschließenden Kanälen im Antriebselement und dem Ausgleichsgehäuse tragen. Dies ermöglicht ein unkompliziertes Zusammenstecken der Getriebeelemente und eine schwingungsunempfindliche und auch bei begrenzt kardanischen und axialen Relativbewegungen absolut dichte Führung des Hydraulikmediums.

Besonders vorteilhaft können mehrere, über den Umfang des Antriebselementes verteilte Steckrohre vorgesehen sein, die mit entsprechenden Kanälen im Antriebselement und im Ausgleichsgehäuse korrespondieren. Über die Steckrohre können entweder gleichzeitig größere Hydraulikmengen oder bei separaten Kanälen verschiedene Hydraulikfunktionen gesteuert werden.

Des weiteren können über die Kanäle und Steckrohre eine ringförmige Hydraulikkammer mit einem Stellkolben zur Verstellung des Antriebselementes versorgbar sein. Durch die Verwendung der Steckrohre kann neben den vorstehenden Vorteilen auch die Kanalführung innerhalb des Antriebselementes vereinfacht werden, weil die Steckrohre ggf. eine direkte Zuführung des Hydraulikmediums in die ringförmige Hydraulikkammer ermöglichen.

Als drehschlüssige Verbindung zwischen dem Antriebselement und dem Ausgleichsgehäuse kann vorteilhaft eine Keilverzahnung vorgesehen sein, die radial innerhalb des Wälzlagers an einem Hals des Antriebselementes und an einem ringförmigen Vorsprung des Ausgleichsgehäuses als Steckverbindung ausgebildet ist. Dies ermöglicht eine baulich günstige und kompakte Getriebekonstruktion, die zudem eine weitere Montagevereinfachung und einen axialen Toleranzausgleich ergibt.

Schließlich kann in einer bevorzugten Anwendung der Erfindung das Antriebselement ein getriebener Scheibensatz eines stufenlosen Umschlingungsgetriebes für Kraftfahrzeuge und das Ausgleichsgehäuse ist ein Ausgleichsgehäuse eines Torsendifferentiales sein, wobei der Abtrieb zur einen Achse des Kraftfahrzeuges durch eine Hohlwelle des Scheibensatzes hindurch verläuft und über die Kanäle und die Steckrohre das Übersetzungsverhältnis des Scheibensatzes zum Umschlingungsmittel steuerbar ist. Der Begriff Torsendifferential ist im Maschinenbau und speziell in der Getriebetechnik bekannt.

Ein Ausführungsbeispiel der Erfindung ist im Folgenden mit weiteren Einzelheiten näher beschrieben.

Die anliegende schematische Zeichnung zeigt in einem Längsschnitt eine Vorrichtung zum hydraulischen Versorgen des getriebenen Scheibensatzes eines Umschlingungsgetriebes für ein Kraftfahrzeug.

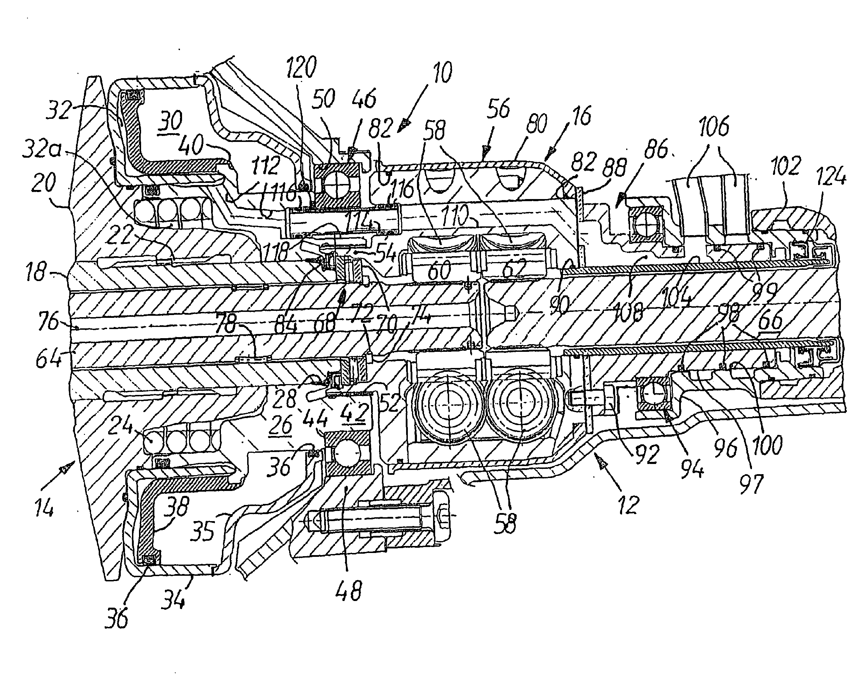

In der Zeichnung bezeichnet 10 allgemein eine Antriebsanordnung, die drehbar in einem nur teilweise dargestelltem Getriebegehäuse 12 gelagert ist und die sich im wesentlichen aus einem nur teilweise ersichtlichen getriebenen Scheibensatz 14 als Antriebselement und einem koaxial dazu benachbartem Zwischenachsdifferential bzw. Torsendifferential 16 als weiteres Element zusammensetzt.

Der Scheibensatz 14 ist Teil eines Umschlingungsgetriebes für Kraftfahrzeuge und wirkt in bekannter Weise über eine Kette oder ein Gliederband mit einem auf einer Getriebeeingangswelle angeordneten, antreibenden Scheibensatz (nicht dargestellt) zusammen.

Der getriebene Scheibensatz 14 weist eine Festscheibe (auf der Zeichnung nicht ersichtlich) auf, die ein gemeinsames Bauteil mit einer daran anschließenden Hohlwelle 18 bildet. Die Festscheibe ist in einer Wand des Getriebegehäuses 12 über ein zweireihiges Kegelrollenlager axial unverschiebbar gelagert.

Auf der Hohlwelle 18 ist die Losscheibe 20 axial verschiebbar geführt, wobei eine mit 22 bezeichnete Keilverbindung einen Formschluss in Umfangsrichtung herstellt. Dabei ist die Losscheibe 20 wie ersichtlich auf der Zeichnung nach links mittels einer Schraubendruckfeder 24 vorgespannt, die an einem Führungsabschnitt 26 abgestützt ist. Der Führungsabschnitt 26 ist durch eine ringförmige Laserschweißverbindung bei 28 fest mit der Hohlwelle 18 verbunden.

Zur Verstellung der Losscheibe 20 relativ zur nicht dargestellten Festscheibe sind zwischen dem Führungsabschnitt 26 und der Losscheibe 20 mittels zusammengeschweißter und an der Losscheibe 20 festgelegter Ringbleche 34, 35 zwei ringförmige Hydraulikkammern 30, 32 gebildet, die durch allgemein mit 36 bezeichnete Dichtringe abgedichtet und durch einen ringförmigen Stellkolben 38 unterteilt sind. Der fest über eine Bördelverbindung 40 mit dem Führungsabschnitt 26 verbundene Stellkolben 38 wirkt bei entsprechender Druckbeaufschlägung der Hydraulikkammer 30, 32 als Reaktionsglied zur entsprechenden axialen Verstellung der Losscheibe 20.

Der Führungsabschnitt 26 weist einen ringförmigen Hals 42 auf, auf dessen Außenumfang der Innenring 44 eines Wälzlagers bzw. Kugellagers 46 sitzt. Das Kugellager 46 ist in einer Getriebegehäusewand 48 in einer entsprechenden Ausnehmung 50 aufgenommen und wirkt somit als weitere Drehlagerung für den Scheibensatz 14.

Am Innenumfang des ringförmigen Halses 42 ist etwa in der Rotationsebene des Kugellagers 46 eine allgemein mit 52 bezeichnete Keilverzahnung eingearbeitet, die mit einer korrespondierenden Keilverzahnung auf einem hülsenförmigen Vorsprung 54 des Ausgleichsgehäuses 56 des Torsendifferentiales 16 als triebliche Verbindung zusammenwirkt.

In dem Ausgleichsgehäuse 56 sind in bekannter Weise drei gleichmäßig über dessen Umfang verteilte Schneckenräderpaare 58 gelagert, die mit entsprechenden Abtriebsrädern 60, 62 in Eingriff sind. Die Abtriebsräder 60, 62 sitzen drehschlüssig auf Abtriebswellen 64, 66, von denen die Abtriebswelle 64 durch die Hohlwelle 18 hindurch über ein nicht dargestelltes Antriebsritzel und ein vorderes Differential die Vorderräder des Kraftfahrzeuges und die Abtriebswelle 66 über eine angeschlossene Kardanwelle und ein hinteres Differential die Hinterräder des Kraftfahrzeuges antreibt.

Die Antriebswelle 64 ist neben der nicht dargestellten Lagerung im Bereich des Antriebsritzels in der einen Belastungsrichtung über ein Axiallager 68 an der Hohlwelle 18 abgestützt, wobei dessen einer Anlaufring 70 an einem in eine Ringnut 72 eingesprengten Sicherungsring 74 gehalten ist.

Das Torsendifferential 16 bzw. dessen Funktionsteile sind mit dem Schmieröl aus dem nicht dargestelltem vorderen Differential beölt, wobei ein in der Abtriebswelle 64 vorgesehener Zuführkanal 76 in das Ausgleichsgehäuse 56 mündet. Die Rückführung des Schmieröles erfolgt in der Gegenrichtung durch die Hohlwelle 18 hindurch, wobei neben dem Axiallager 68 auch noch zwei radial abstützende Nadellager 78 (es ist nur ein Nadellager 78 ersichtlich, das zweite ist etwa im Bereich der Festscheibe positioniert) zwischen der Hohlwelle 18 und der Abtriebswelle 64 beölt werden.

Das Torsendifferential 16 ist vollständig gekapselt ausgebildet, um nur eine Beölung der beschriebenen Funktionsteile mit dem Differential-Schmieröl (einem Hypoidöl) sicherzustellen. Dazu ist ein das Ausgleichsgehäuse 56 umschließendes, ringförmiges Abdeckteil 80 vorgesehen, das in Verbindung mit Dichtringen 82 das Ausgleichsgehäuse 56 nach außen abdichtet. Ein weiterer Dichtring 84 ist im Bereich der Keilverzahnung 52 zwischen der Hohlwelle 18 und dem hülsenförmigen Vorsprung 54 des Ausgleichsgehäuses 56 eingesetzt.

Die stirnseitige Abdichtung des Ausgleichsgehäuses 56 bewirkt schließlich ein rohrförmiger Kolbenringträger 86, dessen Anschlussflansch 88 mit einem weiteren Dichtring 90 dicht mit dem Ausgleichsgehäuse 56 und einer Axialdichtung (nicht dargestellt) verschraubt ist (Schrauben 92).

Der Kolbenringträger 86 und dementsprechend das Ausgleichsgehäuse 56 ist mittels eines weiteren Wälzlagers bzw. Kugellagers 94 in einer entsprechenden, gehäusefesten Aufnahme 96 direkt an den Anschlussflansch 88 anschließend drehbar gelagert, wobei der mit Kolbenringen 98 in entsprechenden Außennuten 99 bestückte Ringabschnitt 97 des Kolbenringträgers 86 wie ersichtlich in eine zylindrische Bohrung 100 des die Aufnahme 96 aufweisenden Gehäuseteiles 102 einragt.

Eine in den Kolbenringträger 86 eingesetzte, rotationssymmetrische Dichtungsbüchse 104 überragt dabei axial den Ringabschnitt 97 und ist zum Gehäuseteil 102 über einen Wellendichtring 124 abgedichtet, so dass kein Hydraulikmedium aus den Kanälen 106, 108 austreten kann.

Über den Kolbenringträger 86 und die in diesen eingesetzte, rotationssymmetrische Dichtungsbüchse 104 können über die ersichtlichen und jeweils mit einem einheitlichen Bezugszeichen versehenen Kanäle 106 im Gehäuseteil 102, über die durch Längsnuten gebildeten Kanäle 108 im Kolbenringträger 86, über die im Ausgleichsgehäuse 56 eingearbeiteten Kanäle 110 und schließlich über die korrespondierenden Kanäle 112 im Führungsabschnitt 26 (es ist in der Schnittansicht der Zeichnung jeweils nur ein Kanal 112 ersichtlich) die Hydraulikkammern 30, 32, 32a wechselseitig mit einem unter Druck stehendem Hydraulikmedium zur Steuerung der Antriebsübersetzung des Umschlingungsgetriebes beaufschlagt werden.

Die hydraulische Verbindung zwischen den Kanälen 110 im Ausgleichsgehäuse 56 und den Kanälen 112 im Führungsabschnitt 26 sind durch drei Steckrohre 114 gebildet. Die Steckrohre 114 ragen dazu jeweils unter Zwischenschaltung von Dichtringen 116 einerseits in eine entsprechende stirnseitige Ausnehmung des Führungsabschnittes 26 und des Ausgleichsgehäuses 56 ein, wobei sie durch im Querschnitt betrachtet halbkreisförmige und radial nach außen offene Ausnehmungen 118 des Führungsabschnittes 26 innerhalb des Innenringes 44 des Kugellagers 46 hindurch geführt sind.

Die Steckrohre 114 (es sind zur Verstellung der Losscheibe 20 wie ausgeführt drei gleichmäßig über den Umfang des Führungsabschnittes 26 bzw. des Ausgleichsgehäuses 56 verteilte Steckrohre 114 vorgesehen) sind mittels an diese angeformte, radiale Vorsprünge 120 zwischen dem Innenring 44 und einer stirnseitigen Ausnehmung 122 des Führungsabschnittes 26 gehalten. Wahlweise kann die axiale Führung des Steckrohres auch durch Anschlag der Stirnflächen gewährleistet werden.

## Patentansprüche

1. Vorrichtung zum Versorgen eines drehbar in einem Getriebegehäuse (12) gelagerten, als Antriebselement dienenden Scheibensatzes (14) eines Umschlingungsgetriebes mit Hydraulikmedium mittels einer hydraulischen Steuerung, wobei:
ein Ausgleichsgehäuse (56) vorgesehen ist, das koaxial zum Scheibensatz (14) angeordnet ist,
das Ausgleichsgehäuse (56) mit dem Scheibensatz (14) drehschlüssig verbunden ist,
das Ausgleichsgehäuse (56) mit einem ersten Kanal (110) versehen ist, **dadurch gekennzeichnet, dass** der Scheibensatz (14) mit einem zweiten Kanal (112) versehen ist, zumindest ein Steckrohr (114) vorgesehen ist, das als Anschlussverbindung dicht in die beiden Kanäle (112, 110) eingesetzt ist und unmittelbar vom Ausgleichsgehäuse (56) zum Scheibensatz (14) verläuft, so dass über den ersten Kanal (110) im Ausgleichsgehäuse (56), das Steckrohr (114) und den zweiten Kanal (112) im Scheibensatz (14) unter Druck stehendes Hydraulikmedium dem Scheibensatz (14) zuführbar ist.

2. Vorrichtung nach Anspruch 1, **dadurch gekennzeichnet, dass** das zumindest eine Steckrohr (114) radial innerhalb eines zwischen dem Scheibensatz (14) und dem benachbart angeordneten Ausgleichsgehäuse (56) vorgesehenen Wälzlagers (46) verläuft.

3. Vorrichtung nach den Ansprüchen 1 und 2, **dadurch gekennzeichnet, dass** der Innenring (44) des Wälzlagers (46) auf einem Hals (42) des Scheibensatzes (14) sitzt und dass das zumindest eine Steckrohr (114) in einer Ausnehmung (118) des Halses (42) verläuft.

4. Vorrichtung nach den Ansprüchen 1 bis 3, **dadurch gekennzeichnet, dass** das Steckrohr (114) mit einem radialen Vorsprung (120) versehen ist, mittels dem es stirnseitig zwischen dem Innenring (44) des Wälzlagers (46) und dem anschließenden Scheibensatz (14) axial gehalten ist oder ohne radialen Vorsprung durch axialen Anschlag an den Stirnflächen haltbar ist.

5. Vorrichtung nach einem oder mehreren der Ansprüche 1 bis 4, **dadurch gekennzeichnet, dass** das Steckrohr (114) an beiden Enden Dichtringe (116) zur Abdichtung mit den anschließenden Kanälen (112, 110) im Scheibensatz (14) und dem Ausgleichsgehäuse (56) trägt.

6. Vorrichtung nach einem oder mehreren der Ansprüche 1 bis 5,
**dadurch gekennzeichnet, dass** mehrere, über den Umfang des Scheibensatzes (14) verteilte Steckrohre (114) vorgesehen sind, die mit entsprechenden Kanälen (112, 110) im Scheibensatz (14) und im Ausgleichsgehäuse (56) korrespondieren.

7. Vorrichtung nach Anspruch 6, **dadurch gekennzeichnet, dass** über die Kanäle (112, 110) und die Steckrohre (114) eine ringförmige Hydraulikkammer (30, 32) mit einem Stellkolben (38) zur Verstellung des Scheibensatzes (14) versorgbar ist.

8. Vorrichtung nach einem oder mehreren der vorhergehenden Ansprüche, **dadurch gekennzeichnet, dass** die drehschlüssige Verbindung zwischen dem Scheibensatz (14) und Ausgleichsgehäuse (56) eine Keilverzahnung (52) ist, die radial innerhalb des Wälzlagers (46) an dem Hals (42) des Scheibensatzes (14) und an einem ringförmigen Vorsprung (54) des Ausgleichsgehäuses (56) als Steckverbindung ausgebildet ist.

9. Vorrichtung nach den vorhergehenden Ansprüchen, **dadurch gekennzeichnet, dass** der Scheibensatz (14) ein getriebener Scheibensatz (14) eines stufenlosen Umschlingungsgetriebes für Kraftfahrzeuge und das Ausgleichsgehäuse (56) ein Ausgleichsgehäuse (56) eines Torsendifferentiales (16) ist, wobei der Abtrieb zur einen Achse des Kraftfahrzeuges durch eine Hohlwelle (18) des Scheibensatzes (14) hindurch verläuft und über die Kanäle (112, 110) und die Steckrohre (114) das Übersetzungsverhältnis des Scheibensatzes (14) zum Umschlingungsmittel steuerbar ist.

## Claims

1. Device for supplying a set of discs (14) mounted rotatably in a transmission housing (12), serving as the drive element of a continuously variable transmission, with hydraulic medium by means of a hydraulic control, whereby:
a differential case (56) is provided which is arranged coaxially with the disk set (14),
the differential case (56) is connected in a rotationally locking manner with the disk set (14),
the differential case (56) is provided with a first channel (110), **characterised in that**
the disk set (14) is provided with a second channel (112), at least one plug tube (114) is provided which is inserted sealingly into the two channels (112, 110) as a connection and runs directly from the differential case (56) to the disk set (14), so that pressurised hydraulic medium can be fed to the disk set (14) via the first channel (110) in the differential case (56), the plug tube (114) and the second channel (112) in the disk set (14).

2. Device according to claim 1, **characterised in that** the at least one plug tube (114) runs radially within a rolling contact bearing (46) provided between the disk set (14) and the adjacent differential case (56).

3. Device according to claims 1 and 2, **characterised in that** the inner ring (44) of the rolling contact bearing (46) sits on a neck (42) of the disk set (14) and that at least one plug tube (114) runs within a recess (118) in the neck (42).

4. Device according to claims 1 to 3, **characterised in that** the plug tube (114) is provided with a radial projection (120) by means of which it is held axially between the inner ring (44) of the rolling contact bearing (46) and the connected disk set (14) or can be held against the end faces, without a radial projection, through axial force.

5. Device according to one or more of claims 1 to 4, **characterised in that** the plug tube (114) carries sealing rings (116) at both ends to seal with the connecting channels (112, 110) in the disk set (14) and the differential case (56).

6. Device according to one or more of claims 1 to 5, **characterised in that** several plug tubes (114) distributed around the circumference of the disk set (14) are provided which correspond with corresponding channels (112, 110) in the disk set (14) and in the differential case (56).

7. Device according to claim 6, **characterised in that** an annular hydraulic chamber (30, 32) with an actuating piston (38) for adjusting the disk set (14) can be supplied via the channels (112, 110) and the plug tubes (114).

8. Device according to one or more of the preceding claims, **characterised in that** the rotationally-locking connection between the disk set (14) and the differential case (56) is a spline (52) which is formed radially within the rolling contact bearing (46) on the neck (42) of the disk set (14) and on an annular projection (54) of the differential case (56), as a plug connection.

9. Device according to the preceding claims, **characterised in that** the disk set (14) is a driven disk set (14) of a continuously variable transmission for motor vehicles and the differential case (56) is a differential case (56) of a Torsen differential (16), whereby the power take-off to an axle of the motor vehicle runs through a hollow shaft (18) of the disk set (14) and the gear ratio of the disk set (14) to the belt mechanism can be controlled via the channels (112, 110) and the plug tubes (114).

## Revendications

1. Dispositif d'alimentation d'un ensemble de disques (14) rotatifs logés dans une boîte de vitesses (12), servant d'élément d'entraînement d'une transmission par courroie avec un milieu hydraulique à l'aide d'une commande hydraulique, dans lequel :
un carter de différentiel (56) est prévu, lequel est agencé de manière coaxiale par rapport à l'ensemble de disques (14),
le carter de différentiel (56) est raccordé par coopération en rotation à l'ensemble de disques,
le carter de différentiel (56) est doté d'un premier canal (110), **caractérisé en ce que**
l'ensemble de disques (14) est doté d'un second canal (112), au moins un coupleur lisse (114) est prévu, lequel est inséré en tant que liaison de raccord hermétique dans les deux canaux (112, 110) et passe immédiatement du carter de différentiel (56) vers l'ensemble de disques (14), de sorte que, via le premier canal (110) dans le carter de différentiel (56), le coupleur lisse (114) et le second canal (112) dans l'ensemble de disques (14), l'élément hydraulique sous pression peut être amené à l'ensemble de disques (14).

2. Dispositif selon la revendication 1, **caractérisé en ce qu'**au moins un coupleur lisse (114) s'étend de manière radiale à l'intérieur d'un roulement (46) prévu entre l'ensemble de disques (14) et le carter de différentiel (56) disposé à côté.

3. Dispositif selon les revendications 1 et 2,
**caractérisé en ce que** la bague intérieure (44) du roulement (46) se trouve sur une tête (42) de l'ensemble de disques (14) et **en ce qu'**au moins un coupleur lisse (114) passe dans un évidement (118) de la tête (42).

4. Dispositif selon les revendications 1 à 3,
**caractérisé en ce que** le coupleur lisse (114) est doté d'une partie saillante radiale (120), au moyen de laquelle il est maintenu axialement sur la face entre la bague intérieure (44) du roulement (46) et l'ensemble de disques raccordé (14) ou bien peut être maintenu sans partie saillante radiale par une butée axiale au niveau des surfaces extérieures.

5. Dispositif selon une ou plusieurs des revendications 1 à 4, **caractérisé en ce que** le coupleur lisse (114) porte, au niveau des deux extrémités, des bagues d'étanchéité (116) pour garantir l'étanchéité avec les canaux raccordés (112, 110) dans l'ensemble de disques (14) et le carter de différentiel (56).

6. Dispositif selon une ou plusieurs des revendications 1 à 5, **caractérisé en ce que** plusieurs coupleurs lisses (114) répartis autour de la périphérie de l'ensemble de disques (14) sont prévus, lesquels correspondent avec les canaux (112, 110) correspondants dans l'ensemble de disques (14) et dans le carter de différentiel (56).

7. Dispositif selon la revendication 6, **caractérisé en ce qu'**une chambre hydraulique (30, 32) en forme de bague peut être alimentée via les canaux (112, 110) et les coupleurs lisses (114) avec un piston de réglage (38) pour régler l'ensemble de disques (14).

8. Dispositif selon une ou plusieurs des revendications précédentes, **caractérisé en ce que** le raccord par coopération de rotation entre l'ensemble de disques (14) et le carter de différentiel (56) est une denture conique (52) qui est formée de manière radiale à l'intérieur du roulement (46) au niveau de la tête (42) de l'ensemble de disques (14) et au niveau d'une partie saillante en forme de bague (54) du carter de différentiel (56) en tant que fiche de raccordement.

9. Dispositif selon les revendications précédentes, **caractérisé en ce que** l'ensemble de disques (14) est un ensemble de disques entraînés d'une transmission par courroie à action progressive pour des véhicules et le carter de différentiel (56) est un carter de différentiel d'un différentiel Torsen (16), l'entraînement par rapport à un arbre du véhicule passant à travers un arbre creux (18) de l'ensemble de disques (14) et le rapport de transmission de l'ensemble de disques (14) pouvant être commandé par le moyen de transmission par courroie via les canaux (112, 110) et le coupleur lisse (114).
